(19) Europäisches Patentamt
European Patent Office
Office européen des brevets

(11) **EP 3 053 108 B1**

(12) **FASCICULE DE BREVET EUROPEEN**

(45) Date de publication et mention
de la délivrance du brevet:
**26.10.2022 Bulletin 2022/43**

(21) Numéro de dépôt: **14780808.3**

(22) Date de dépôt: **29.09.2014**

(51) Classification Internationale des Brevets (IPC):
**G06N 3/06** (2006.01)

(52) Classification Coopérative des Brevets (CPC):
**G06N 3/06**

(86) Numéro de dépôt international:
**PCT/EP2014/070717**

(87) Numéro de publication internationale:
**WO 2015/049183 (09.04.2015 Gazette 2015/14)**

(54) **CIRCUIT ELECTRONIQUE, NOTAMMENT APTE A L'IMPLEMENTATION D'UN RESEAU DE NEURONES, ET SYSTEME NEURONAL**

ELEKTRONISCHE SCHALTUNG, INSBESONDERE GEEIGNET ZUR IMPLEMENTIERUNG EINES NEURONALEN NETZES UND NEURONALES SYSTEM

ELECTRONIC CIRCUIT SUITABLE FOR THE IMPLEMENTATION OF A NEURAL NETWORK AND SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.10.2013 FR 1359666**

(43) Date de publication de la demande:
**10.08.2016 Bulletin 2016/32**

(73) Titulaire: **Commissariat à l'Énergie Atomique et aux Énergies Alternatives**
**75015 Paris (FR)**

(72) Inventeurs:
• **DURANTON, Marc**
**F-91400 Orsay (FR)**
• **PHILIPPE, Jean-Marc**
**F-91190 Gif-sur-Yvette (FR)**
• **PAINDAVOINE, Michel**
**F-21370 Plombieres les Dijon (FR)**

(74) Mandataire: **Atout PI Laplace**
**Immeuble "Visium"**
**22, avenue Aristide Briand**
**94117 Arcueil Cedex (FR)**

(56) Documents cités:
• **MISRA J ET AL: "Artificial neural networks in hardware: A survey of two decades of progress", NEUROCOMPUTING, ELSEVIER SCIENCE PUBLISHERS, AMSTERDAM, NL, vol. 74, no. 1-3, 31 décembre 2010 (2010-12-31), pages 239-255, XP027517200, ISSN: 0925-2312, DOI: 10.1016/J.NEUCOM.2010.03.021 [extrait le 2010-11-23]**
• **JOHANSSON H O ET AL: "A 200-MHz CMOS bit-serial neural network", ASIC CONFERENCE AND EXHIBIT, 1994. PROCEEDINGS., SEVENTH ANNUAL IEEE I NTERNATIONAL ROCHESTER, NY, USA 19-23 SEPT. 1994, NEW YORK, NY, USA,IEEE, 19 septembre 1994 (1994-09-19), pages 312-315, XP010140466, DOI: 10.1109/ASIC.1994.404551 ISBN: 978-0-7803-2020-8 cité dans la demande**
• **CLEMENT FARABET ET AL: "NeuFlow: A runtime reconfigurable dataflow processor for vision", COMPUTER VISION AND PATTERN RECOGNITION WORKSHOPS (CVPRW), 2011 IEEE COMPUTER SOCIETY CONFERENCE ON, IEEE, 20 juin 2011 (2011-06-20), pages 109-116, XP031926582, DOI: 10.1109/CVPRW.2011.5981829 ISBN: 978-1-4577-0529-8 cité dans la demande**

**Description**

La présente invention concerne un circuit apte à l'implémentation d'un réseau de neurones. Elle concerne également un système neuronal. L'invention s'applique notamment pour l'implémentation de réseaux de neurones sur silicium pour le traitement de signaux divers, y compris des signaux multidimensionnels comme des images par exemple. Plus généralement, l'invention permet la réalisation efficace sur silicium d'une chaîne complète de traitement du signal par l'approche des réseaux de neurones. Elle permet aussi la réalisation efficace de méthodes de traitement du signal conventionnelles, utiles par exemple en pré-traitement avant le traitement neuronal et/ou en post-traitement.

Les réseaux de neurones sont déjà très utilisés et peuvent potentiellement être utilisés dans de très nombreuses applications, notamment dans tous les dispositifs, systèmes ou procédés faisant appel à des approches ou des mécanismes d'apprentissage servant à définir la fonction à réaliser, contrairement aux approches plus traditionnelles dans lesquelles les actions à effectuer sont définies de façon explicite par un « programme ». Une multitude de systèmes, allant des domaines techniques ou scientifiques les plus sophistiqués jusqu'aux domaines de la vie courante sont ainsi concernés. Toutes ces applications exigent des performances toujours accrues notamment en termes d'efficacité, d'adaptabilité, de taille et de consommation d'énergie. Les algorithmes mis en œuvre sont essentiels pour atteindre ces performances. L'architecture matérielle, permettant d'implémenter ces algorithmes, doit aussi être prise en compte pour l'atteinte des performances, en particulier à un moment où la croissance en fréquence des processeurs stagne ou du moins semble avoir atteint ses limites.

En première approximation, on peut classer les architectures matérielles neuronales suivant deux axes :

- Un premier axe concerne leur structure, celle-ci pouvant être numérique ou analogique, voire hybride ;
- Un deuxième axe concerne leur spécialisation vis-à-vis des réseaux de neurones susceptibles d'être implémentées, les architectures pouvant être spécialisées dans quelques réseaux de neurones bien définis, telles que RBF (*Radial-Basis Function*) ou carte de Kohonen, ou pouvant être génériques, notamment programmables pour permettre d'implémenter une plus grande variété de réseaux.

Les types d'architectures investiguées dans le cadre de la présente demande de brevet sont liées à des circuits génériques et spécialisés, à implémentation numérique.

Dans ce cadre, un problème à résoudre est de permettre la réalisation efficace sur silicium, ou tout autre circuit, d'une chaîne complète de traitement du signal, au sens générique, par l'approche des réseaux de neurones. Ce problème générique se décline selon au moins les quatre problèmes suivant, révélés par l'art antérieur :

- Les chaînes de traitement de signal de ce type incluent en général des traitements de signal plus classiques, par exemple des convolutions sur un signal ou une image, en pré-traitement ou post-traitement. Les systèmes classiques utilisent des processeurs spécialisés pour effectuer ces traitements en plus de l'architecture de traitement neuronal, aboutissant à un système plus complexe et plus volumineux, et consommant plus d'énergie ;
- Le type de réseau de neurones utilisé dépend très fortement de l'application, voire du jeu de données. En règle générale, les circuits utilisés pour implémenter ces réseaux de neurones sont spécialisés pour quelques types de réseaux et ne permettent pas une implémentation efficaces de divers types de réseaux de neurones ainsi que des topologies variables ;
- En liaison avec le point précédent, un autre paramètre d'implémentation pouvant varier est la taille du réseau, c'est-à-dire notamment les nombres d'entrées et les nombres de neurones. Certains circuits utilisés pour le traitement neuronal ne sont pas extensibles, ne permettant pas l'implémentation de réseaux de neurones dont la taille dépasse leur capacité ;
- Les domaines applicatifs des réseaux de neurones étant très variés, la dynamique des poids et des entrées du réseau de neurones est en conséquence très variable. De plus pour une même application et un même réseau de neurones, la dynamique des poids peut varier en fonction de la phase dans laquelle on se trouve dans le cas d'un apprentissage en ligne. Sur des cas typiques, une dynamique de 16 bits sur les poids lors de la phase d'apprentissage est nécessaire tandis que dans la phase de traitement, une dynamique de seulement 8 bits peut suffire. Les architectures classiques sont dimensionnées au pire cas tant au niveau des opérateurs et des interconnexions qu'au niveau de la mémoire. Elles ne permettent pas d'obtenir une flexibilité de la dynamique des poids par rapport à l'application et donc d'utiliser à chaque fois la quantité de silicium juste nécessaire.

Des solutions sont connues, mais aucune ne résout l'ensemble de ces quatre problèmes, et quand elles adressent l'un ou l'autre de ces problèmes, les résolvent insuffisamment.

Parmi ces solutions, on peut citer le circuit décrit dans le document de Young, D ; Lee, A. W H et Cheng, L.M., "Hardware realisation of artificial neural network with application to information coding," Neural Networks, 1994. IEEE World Congress on Computational Intelligence., 1994 IEEE International Conference on , vol.6, no., pp.3982,3985, 27 Jun- 2 Jul 1994. Ce circuit comprend huit neurones, avec des traitements neuronaux et une communication série d'une précision de 16 bits, qui semble fixe. Outre le fait que la précision de calcul semble fixe, le très faible parallélisme de l'architecture la rend impropre au traitement intensif de données.

Le document Misra et Al., "Artificial neural networks in hardware: A survey of two decades of progress", dans NEUROCOMPUTING, ELSEVIER SCIENCE PUBLISHERS, AMSTERDAM, NL, vol. 74, no. 1-3, 31 décembre 2010, pages 239-255, DOI: 10.1016/J.NEUCOM.2010.03.021 décrit un circuit réalisant un état de l'art de réalisations physiques de réseaux de neurones avec un codage des adresses en parallèle en entrée.

Une autre solution est proposée dans le document de Ienne, P. et Viredaz, M.A., "GENES IV: A bit-serial processing element for a built-model neural-network accelerator," Application-Specific Array Processors, 1993. Proceedings., International Conference on, vol., no., pp.345,356, 25-27 Oct 1993, présentant un tableau systolique de PEs (*Processing Element*), chaque PE correspondant à une synapse du réseau de neurones. La communication inter-PE et le traitement sont fait en série, mais aucune des bonnes propriétés de ce mode de traitement n'est utilisée, sachant qu'il est vu comme une contrainte. Ce circuit est vu comme générique, permettant d'implémenter des classes de réseaux de neurones différentes, de type Multi-Layer Perceptron ou carte de Kohonen. Un système d'échange de coefficients rapide (*shadow register*) est implémenté. Le modèle systolique a été pendant un certain temps vu comme ayant de nombreux avantages pour l'implémentation de réseaux de neurones, ce qui implique que beaucoup d'architectures l'utilisent. Ainsi, en plus du document précédent, on peut citer le document de Ramacher, U.; Raab, W.; Hachmann, J.A.U.; Beichter, J.; Bruis, N.; Wesseling, M.; Sicheneder, E.; Glass, J.; Wurz, A.; Manner, R., "SYNAPSE-1: a high-speed general purpose parallel neurocomputer system," Parallel Processing Symposium, 1995. Proceedings., 9th International, vol., no., pp.774,781, 25-28 Apr 1995, ayant une mémoire de poids dédiée et de Eppler, W.; Fischer, T.; Gemmeke, H.; Menchikov, A., "High speed neural network chip for trigger purposes in high energy physics," Design, Automation and Test in Europe, 1998., Proceedings , vol., no., pp.108,115, 23-26 Feb 1998, avec une implémentation parallèle des opérateurs et une possibilité de mise en cascade lui assurant la propriété d'extensibilité.

D'autres processeurs sont plus génériques et plus évolués. En particulier, la solution décrite dans le document de N. Mauduit, et al., "L-Neuro 1.0: A Piece of Hardware LEGO for Building Neural Network Systems, " IEEE Trans. Neural Networks, Vol. 3, No. 3, May 1992, pp. 414-422, présente un processeur neuronal dédié, sans pré-/post-traitement, avec une précision variable en fonction de la phase de traitement par apprentissage en 16 bits et reconnaissance en 8 bits. Il supporte la virtualisation des neurones par un mécanisme d'accès direct mémoire DMA (*Direct Access Memory*) et la multiplication des unités de calcul est mise en série. Une génération suivante décrite dans le document de M. Duranton, "L-Neuro 2.3: A VLSI for Image Processing by Neural Networks," microneuro, pp.157, 5th International Conference on Microelectronics for Neural Networks and Fuzzy Systems (MicroNeuro '96), 1996, ajoute le support du traitement intensif de signal avec des unités de traitement du signal DSPs (*Digital Signal Processing*) et du parallélisme. La mémoire est unifiée, sans mémoire de poids dédiée, et les interconnexions supportent efficacement la localité et le "broadcast". Cependant, cette solution ne supporte plus la précision variable au bit près. L'interconnexion n'est pas non plus hiérarchique.

L'interconnexion jouant un rôle crucial dans les implémentations de réseaux de neurones, des architectures comme celle décrite dans le document de Hammerstrom, D., "A VLSI architecture for high-performance, low-cost, on-chip learning," Neural Networks, 1990., 1990 IJCNN International Joint Conference on , vol., no., pp.537,544 vol.2, 17-21 June 1990, l'ont mise au cœur de leur fonctionnement. Ainsi, ce type d'architecture supporte le broadcast de manière très efficace ainsi que des connexions locales inter-processeurs. L'aspect calculatoire est dévolu à des unités DSP, en faisant une architecture relativement généraliste. L'aspect communication est aussi au cœur de l'architecture décrite dans le document de Yasunaga, M.; Masuda, N.et al, "A self-learning neural network composed of 1152 digital neurons in wafer-scale LSIs," Neural Networks, 1991. 1991 IEEE International Joint Conference on , vol., no., pp.1844,1849 vol.3, 18-21 Nov 1991, avec l'utilisation de bus TDMA (*Time Division Multiple Access)* disposés de manière hiérarchique et permettant l'émission d'informations.

La communication et le traitement série sont au cœur du document de Johansson, H.O. et al, "A 200-MHz CMOS bit-serial neural network," ASIC Conference and Exhibit, 1994. Proceedings., Seventh Annual IEEE International, pp.312,315, 19-23 Sep 1994. Ainsi, l'utilité de la précision variable est évoquée, sans cependant d'application précise. La solution décrite supporte la mise en cascade pour l'extension mais pas l'apprentissage en ligne, ni même sur une puce, hors ligne.

Certaines architectures font aussi le choix délibéré d'utiliser une communication et un traitement pour des données en parallèle. En particulier l'architecture décrite dans le document de Wojciechowski, E., "SNAP: a parallel processor for implementing real-time neural networks" Aerospace and Electronics Conference, 1991. *NAECON 1991., Proceedings of the IEEE 1991 National , vol., no., pp.736,742 vol.2, 20-24 May 1991,* utilise des opérateurs parallèles, et même du SIMD (*Single Instruction Multiple Data*) pour accroître le parallélisme du traitement. Comme dans le document de M. Duranton ci-dessus, la mémoire sur le circuit est banalisée et l'aspect générique de l'architecture lui permet d'implémenter divers types de réseaux de neurones comme des mémoires associatives, des réseaux de Hopfield et du perceptron multi-couche.

Les architectures précédemment citées n'utilisent pas de calcul flottant mais cette propriété a été utilisée dans l'architecture décrite dans le document de Kondo, Y. et al, "A 1.2 GFLOPS neural network chip for high-speed neural network servers," Solid-State Circuits, IEEE Journal of , vol.31, no.6, pp.860,864, Jun 1996, implémentée avec des opérateurs flottants interconnectés en anneau, permettant notamment une extension simple du réseau. Les mémoires sont unifiées et les opérateurs sont parallèles.

Plus récemment, de nouveaux types de réseaux de neurones sont apparus : les réseaux profonds ou « deep networks » avec notamment les algorithmes CNN (*Convolutional Neural Networks)* et HMAX. Ces algorithmes très efficaces et les progrès autour des technologies CMOS ont permis à de nouvelles architectures de voir le jour. Par exemple, l'architecture décrite dans le document de Farabet, C., "NeuFlow: A runtime reconfigurable dataflow processor for vision," Computer Vision and Pattern Recognition Workshops (CVPRW), 2011 IEEE Computer Society Conference on , vol., no., pp.109,116, 20-25 June 2011, est spécialement conçue pour pouvoir implémenter efficacement ces réseaux importants dans les algorithmes de vision. Ainsi, cette architecture est une architecture en flot de données, dédiée aux applications de type vision.

D'un autre côté, dans les années 2000, des architectures plus optimisées ont vu le jour. Notamment, une évolution du processeur ZISC (Zero Instruction Set Computer) de la société IBM a été conçue par la société Cognimem Technologies, elle est présentée sur le site http://www.cognimem.com. Ce processeur neuronal ne fait cependant pas de traitement de signal.

Un document MISRA et al : « Artificial neural networks in hardware : A survey of two decades of progress », NEUROCOMPUTING, ELSEVIER SCIENCE PUBLISHERS, AMSTERDAM, NL, vol. 74, no. 1-3, 31 décembre 2010, pages 239-255, divulgue un circuit apte à implémenter un réseau de neurones.

Un but de l'invention est donc de résoudre au moins l'ensemble des problèmes précités. A cet effet, l'invention a pour objet un circuit tel que défini par les revendications.

L'invention a également pour objet un système neuronal composé de circuits tels que définis par les revendications.

D'autres caractéristiques et avantages de l'invention apparaîtront à l'aide de la description qui suit, faite en regard de dessins annexés qui représentent :

- la figure 1, un exemple de circuit selon l'invention ;
- la figure 2, une illustration du mode de transformation parallèle série appliqué en entrée du circuit ;
- la figure 3, un exemple de la structure des bus internes à un circuit selon l'invention.

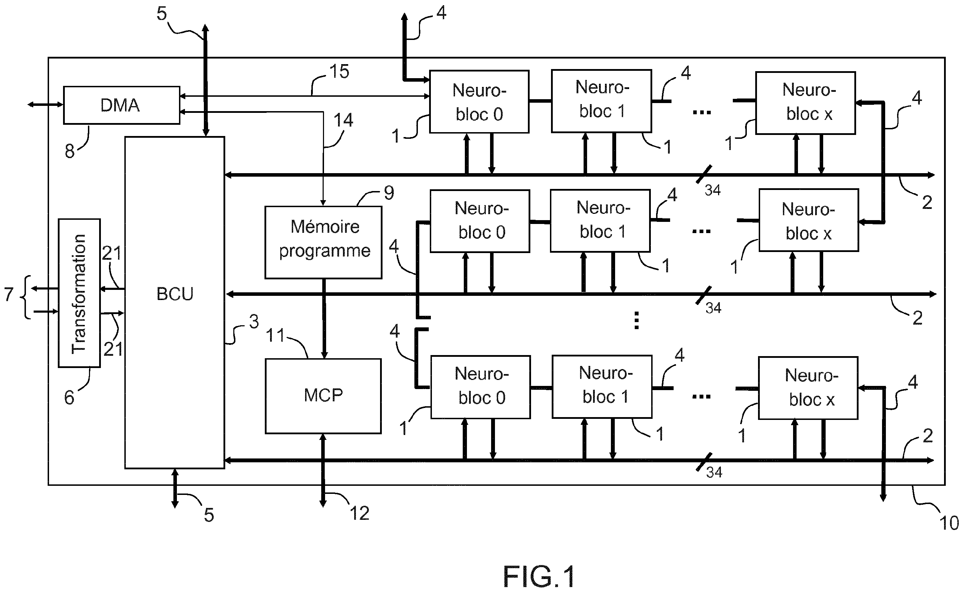

La figure 1 présente un exemple d'architecture matérielle selon l'invention, pour l'implémentation d'un réseau de neurones. Plus particulièrement, cette architecture est décrite par un circuit 10 apte à implémenter un réseau de neurones. Ce circuit peut lui-même être connecté avec d'autres circuits identiques, un système neuronal selon l'invention comporte des circuits 10, juxtaposés et/ou cascadés comme cela sera décrit par la suite.

Dans l'exemple de la figure 1, le circuit 10 comporte 32 modules 1 qui peuvent être identiques, appelés par la suite neuro-blocs. Un neuro-bloc peut être considéré comme l'élément de base puisqu'il est apte à implémenter un ensemble de neurones. De façon connue, un neurone d'ordre i réalise une fonction du type :

$$R_i = f(\sum_j w_{ij} E_j)$$

$w_{ij}$ et $E_j$ étant respectivement les poids synaptiques associés au neurone et ses entrées. Un neuro-bloc comporte les unités arithmétiques et logiques (ALU) permettant de réaliser toutes ces fonctions neuronales. Un mode de réalisation possible des neuro-blocs sera décrit par la suite.

Les neuro-blocs 1 sont répartis par branches. Une branche est composée de plusieurs neuro-blocs 1 et d'un bus de diffusion 2 que partagent les neuro-blocs, reliés à ce bus. Les branches sont construites de telle façon que seul un nombre défini de neuro-blocs partagent un même bus. Cela créée une segmentation des interconnexions entre les blocs, permettant notamment d'optimiser la consommation d'énergie et de réduire le temps cycle dans un mode de multiplexage à accès multiple du type TDMA.

Dans une configuration à 32 neuro-blocs par exemple, les neuro-blocs peuvent être répartis en 4 branches de 8 neuro-blocs ou en 8 branches de 4 neuro-blocs.

Avantageusement, ces branches permettent d'introduire du parallélisme de communication à l'architecture. En effet, un neuro-bloc 1 d'une branche peut échanger ses données avec les neuro-blocs dans sa branche sans perturber les neuro-blocs d'une autre branche.

D'autre part, tous les neuro-blocs sont par exemple reliés par une ligne d'interconnexion 4 ayant la structure d'un bus chaîné. Plus précisément, les unités arithmétiques et logiques (ALU) de chaque neuro-bloc sont branchées sur ce bus. La ligne d'interconnexion 4 « inter-ALU » traverse ainsi tous les neuro-blocs 1 d'un même circuit 10. Dans le cas d'un chaînage de circuits 10, l'ALU du dernier neuro-bloc d'un circuit précède l'ALU du premier neuro-bloc du circuit voisin. A cet effet, la ligne d'interconnexion 4 est apte à se prolonger vers l'extérieur du circuit 10 en amont et en aval des neuro-blocs. Chaque branche est reliée à une unité de routage et de calcul 3, appelée par la suite BCU (Broadcast and Computation Unit), les échanges entre les différentes branches se faisant via cette unité 3.

L'unité BCU 3 reçoit par ailleurs des données d'entrée et transmet des données en sortie de circuit via un module de transformation des données d'entrée/sortie 6.

Ce module 6 est dédié à la transformation des données d'entrées codées selon un protocole parallèle en données codées selon un protocole série. Le module effectue également la transformation inverse, transformant les données séries internes en données parallèles en sortie du bloc.

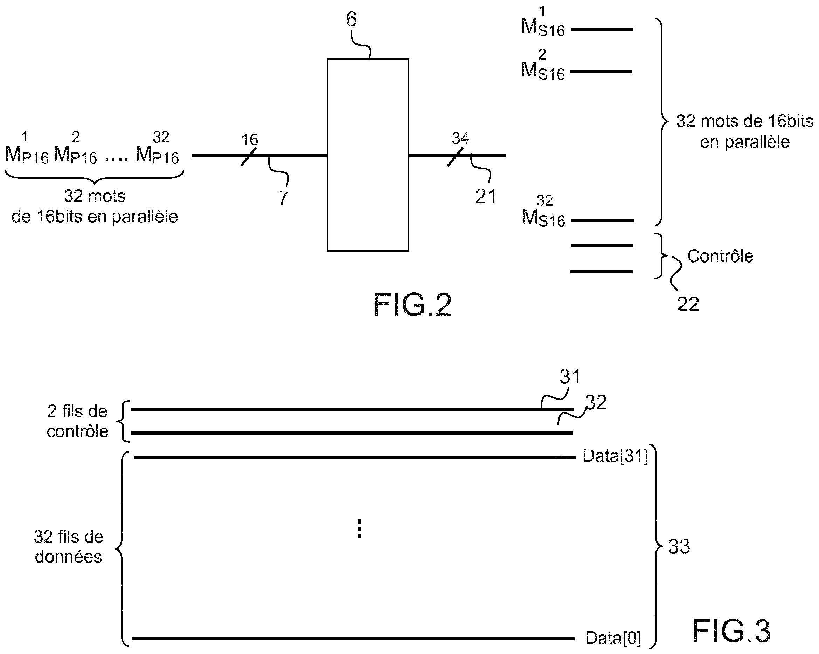

La figure 2 illustre le type de transformation effectuée par le module 6. Dans l'exemple présenté, les mots en entrée sont codés sur 16 bits parallèles. 32 mots $M^1{}_{P16}$, $M^2{}_{P16}$, ... $M^{32}{}_{P16}$, arrivant par exemple successivement sur le module 6 en entrée du circuit 10 via un bus parallèle 7, sont transformés en 32 mots de 16 bits série $M^1{}_{S16}$, $M^2{}_{S16}$, ... $M^{32}{}_{S16}$. Les 32 mots sont parallélisés sur un bus interne 21, un fil étant dédié à chaque mot codé en série. Ce bus 21 véhicule ces données d'entrée codées en série vers le module de routage 3, lequel diffuse ces données vers les branches et autres composants internes ou externes.

Dans l'exemple de réalisation présenté aux figures 1 et 2, le protocole de communication interne utilise deux bits de contrôles 22. Ainsi le bus interne 21 en sortie du module 6 comporte 34 bits, comme tous les bus de diffusion interne 2. En effet, selon l'invention tous les échanges de données à l'intérieur d'un circuit 10 se font selon un protocole de type série. Plus généralement, toutes les données sont codées en série dans tout le bloc. Tous les composants, mémoire et unités de calculs notamment, ou interconnexions internes traitent les données codées en série. Les liaisons telles que le bus de diffusion 2, la ligne d'interconnexion 4 et toutes les autres liaisons d'interfaces avec l'extérieur sont au format 34 bits. De façon générale, les bus internes fonctionnent selon un même protocole série avec le même nombre de fils en parallèle.

Le codage série est donc appliqué dans toute la structure interne d'un circuit 10. Pour le codage dans les mémoires, on réalise ainsi un codage transposé au lieu d'un codage standard, la transposition étant illustrée par la figure 2 où l'on transforme 32 mots de 16 bits en parallèle en 32 mots de 16 bits en série.

La précision des données, parallèle ou série, peut être différente de 16 bits. Elle dépend notamment de la structure des neuro-blocs 1. Une précision utilisée peut être de 8 bits par exemple. De façon générale, le module de transformation parallèle-série 6 reçoit séquentiellement en entrée N mots de x bits, selon un protocole de type parallèle pour le nombre de bits, et les transforme en N mots parallèles de x bits en série. Comme indiqué précédemment, un fil du bus interne d'entrée et par la suite du bus de diffusion est dédié à chaque mot. Lorsque les bus du circuit 10 comportent 32 bits, en dehors des bits de contrôle, N est inférieur ou égal à 32. Avantageusement, ce codage série dans toute la structure interne apporte une solution au problème de la dynamique des entrées et des poids du réseau de neurones. En effet, l'implémentation totalement série des mécanismes interne à l'architecture du bloc permet de moduler la précision du traitement en fonction de l'application, des données, de la phase d'exécution, voire à la volée et de réutiliser les ressources inutilisées, par exemple les ressources de mémorisation qui sont ainsi allouées au bit près. De même, plus la précision va être faible, plus la vitesse de traitement de l'architecture va être élevée.

La figure 3 présente un exemple de structure des signaux du bus de diffusion 2. Cette structure est conforme au mode de transformation du module 6 et du traitement série de toutes les données internes à un circuit 10. Le bus comporte deux bits de contrôle. Un premier bit 31 indique qu'une donnée valide est présente sur le bus. Un deuxième bit 32 indique selon son état si le « flit » (un « flit » correspondant par exemple à chaque mot parallèle de 34 bits circulant sur le bus) correspondant est un « flit » de contrôle ou une partie des données.

Le bus comporte 32 fils de données, avec un fil dédié par mot, chaque mot étant codé en série. Ainsi le mode de transmission des données se fait selon un fil par mot, 16 mots étant transmis sur le bus pour transmettre 32 mots de 16 bits, la transmission se faisant en 16 cycles et au moins un cycle de contrôle supplémentaire.

Avantageusement, l'unité BCU 3 effectue notamment deux séries de fonctions.

Elle effectue notamment la diffusion des données, le routage des données branche par branche, des transferts entre circuits 10 et la segmentation des données. En particulier, elle gère les échanges de données entre les différentes branches mais également les échanges avec d'autres circuits 10. A cet effet, elle comporte en entrée/sortie un bus d'interconnexion 5 de façon à router ou diffuser des données vers une unité externe. Ainsi, l'unité BCU 3 route et diffuse des données vers d'autres circuits via le bus d'interconnexion 5 reliant les BCU des différents circuits 10 composant un système neuronal. A l'intérieur d'un circuit 10, l'unité BCU diffuse les données dans les différents bus 2, isole les branches, transmet des données d'un bus à un autre. De même, l'unité BCU 3 peut diffuser des données vers les unités BCU d'autres circuits 10. Pour ces opérations de routage et de diffusion, le protocole de communication utilise un mot de contrôle supplémentaire qui contient l'identifiant d'un neuro-bloc cible, c'est-à-dire le neuro-bloc destinataire du message, ou un code de diffusion indiquant à quelles branches ou quelles autres unités BCU envoyer le message.

La deuxième série de fonctions concerne des opérations de calcul. En particulier, l'unité BCU 3 effectue des opérations globales sur les données en raison du fait qu'elle a une vue sur chaque donnée, en particulier elle peut effectuer des opérations sur les valeurs (additions, calcul de minimum/maximum, ...). Elle peut par exemple, effectuer la somme ou extraire le maximum des données reçues sur plusieurs branches et diffuser ce résultat sur un ensemble de branches.

Cette unité 3 est composée de ressources de routage, par exemple des multiplexeurs, et d'unités de calcul permettant notamment d'effectuer les fonctions et opérations décrites ci-dessus.

Dans un mode de réalisation possible, pour les opérations globales comme par exemple le calcul du maximum global, chaque neuro-bloc 1 est programmé pour envoyer son propre maximum local, codé en série, à l'unité BCU 3. Cet envoi est par exemple réalisé sur un fil dédié du bus de diffusion 2, un fil du bus étant affecté à chaque neuro-bloc 1. Ensuite, l'opération globale effectuée par l'unité 3 échantillonne les différentes données selon leur précision, définie par le nombre de bits, et réalise le calcul global.

Un module d'accès direct mémoire 8 (DMA) permet une extension de la mémoire disponible. Il fait fonction de gestion centrale de l'espace mémoire disponible pour le circuit 10. A cet effet, il est couplé via des bus 14, 15 à une mémoire interne 9, contenant un programme, et à chaque neuro-bloc, plus particulièrement à la l'unité de gestion mémoire de chaque neuro-bloc. En particulier, il peut gérer une mémoire externe remplaçant la mémoire interne 9, ou la suppléer, pour des traitements exigeant une grande capacité de mémoire, supérieure à la capacité de la mémoire interne. C'est le cas par exemple pour stocker des coefficients synaptiques, certains programmes ou des données images.

Le module DMA peut être branché sur le bus d'un système incorporant le circuit 10 permettant notamment à ce dernier d'utiliser la mémoire du système. Il peut aussi être relié à une mémoire externe dédiée, en dehors du système.

L'architecture selon l'invention permet donc d'obtenir une banalisation de la mémoire permettant d'augmenter la capacité mémoire totale disponible, soit pour stocker de grandes quantités de données en entrée dans le mode de traitement du signal ou de grandes quantités de poids pour des réseaux complexes dans un mode de reconnaissance utilisant les fonctions neuronales.

Le module DMA est aussi une unité de gestion centrale de la mémoire du bloc. A cet effet, il est lié à l'unité de gestion de la mémoire locale de chaque neuro-bloc 1. Le mécanisme de DMA reliant tous les modules de calcul, notamment les neuro-blocs et l'unité BCU 3 permet d'obtenir une virtualisation des données et des poids. Ce mécanisme de virtualisation des données permet notamment de réaliser des réseaux de neurones ou des traitements sur des images dépassant la taille de la mémoire interne du circuit 10.

Une fonction supplémentaire du DMA peut être de lire ou d'écrire des données dans la mémoire interne 9 et/ou dans les neuro-blocs, par exemple dans la phase d'initialisation du réseau de neurone ou encore en phase de déboggage afin de fournir les résultats intermédiaires locaux à un dispositif de mise au point externe.

Un module de contrôle 11 fait fonction de processeur de contrôle centralisé MCP (Master Control Processor). Un circuit 10 peut alors être considéré comme un processeur de type VLIW (Very Long Instruction Word) avec une largeur correspondant au nombre de branches, 4 ou 8 par exemple. Un mot à l'intérieur d'une instruction globale, de ce processeur VLIW, correspond à une branche et est donc envoyé à l'unité de contrôle interne de chaque neuro-bloc 1. Les neuro-blocs de chaque branche sont ainsi contrôlés par une instruction du type SIMD (Single Instruction Multiple Data), toutes les unités arithmétiques et logiques (ALU) de tous les neuro-blocs 1 d'une branche exécutant les instructions envoyées par le module MCP 11. La mémoire de ce module 11 est par exemple liée au module DMA 8 de façon à pouvoir bénéficier de l'extension de mémoire disponible, notamment pour mettre en œuvre des programmes complexes nécessitant une grande capacité de mémoire.

Le module de contrôle 11 est interfacé vers l'extérieur du circuit 10 par une liaison 12. Cette liaison permet notamment de synchroniser le module 11 avec d'autres modules de contrôle de circuits 10 et donc de synchroniser le fonctionnement de ces derniers dans un ensemble neuronal composé de ces circuits. La liaison 12 permet également au module 11 de recevoir des instructions externes.

Un neuro-bloc 1 est un module principal de calcul à l'intérieur du circuit 10. Plusieurs modes de réalisation sont possibles. Il comporte typiquement un ensemble ou « cluster » de 32 unités arithmétique et logiques ALU séries fonctionnant selon un mode SIMD (Single Instruction Mutliple Data), c'est-à-dire qu'en fait un neuro-bloc implémente 32 neurones. Il comporte par exemple les sous-modules et interfaces suivants :

- Un sous-module d'accès direct mémoire DMA gérant notamment une mémoire interne de type RAM alimentant les 32 modules ALU ;
- Des interfaces d'entrées/sorties pour coupler le neuro-bloc au bus de diffusion 2 avec un protocole série ;
- Des interconnexions locales entre les ALU permettant notamment de réaliser tous les calculs nécessaires.

Avantageusement, l'invention permet d'obtenir une architecture reconfigurable et extensible pour l'implémentation efficace de réseaux de neurones.

En particulier, la configuration série complète permet d'obtenir une précision variable au bit près jusqu'à 32 bits, voire plus selon le nombre de bits disponibles sur les bus internes. Cela permet d'utiliser toutes les ressources de mémorisation dans le compromis entre la précision et le nombre de synapses notamment.

La combinaison de transmission série, de communications locales et de diffusion permet de réaliser efficacement toutes les topologies de réseaux de neurones.

La structure des interconnexions avec différents mécanismes de diffusion hiérarchique et de routage permet à moindre coût de surface de silicium, de réaliser des réseaux allant du très peu connecté au totalement connecté. Plus précisément, la structure d'interconnexions hiérarchique permet à la fois un mode de diffusion efficace, le routage et une extension simple du système neuronal par possibilité de mise en cascade ou juxtaposition des circuits 10 composant le système. La mise en cascade peut être effectuée par le bus d'interconnexion 4 reliant les neuro-bloc entre eux et d'un circuit à l'autre. La juxtaposition peut être réalisée par le bus d'interconnexion 5 reliant les unités BCU 3 des différents circuits 10. L'extension du système par cascade ou par diffusion entre plusieurs circuits 10 conserve par ailleurs le codage série intégral, ce qui est un gage de généralité au niveau de la dynamique des circuits.

La structure en branches permet notamment des calculs indépendants (en particulier non systoliques) avec un contrôle adapté (parallélismes des données par rapport aux tâches possibles), tout en gardant un mécanisme de contrôle simple, combinant des calculs de prétraitement et les calculs effectués par les réseaux de neurones. De plus l'implémentation d'opérateurs de calcul très génériques, tels que ceux contenu dans l'unité BCU 3, allant au-delà de la simple implémentation de réseaux de neurones augmente la possibilité d'effectuer des calculs complexes, notamment en coopération avec l'extension de capacité mémoire par les modules DMA 8.

L'invention a été décrite pour une application aux réseaux de neurones. Un circuit selon l'invention est en effet apte à implémenter un réseau de neurones. Cependant, un circuit selon l'invention peut s'appliquer pour des traitements du signal classiques. Les modules 1, dit neuro-blocs, peuvent en effet réaliser des fonctions élémentaires de traitement du signal qui ne sont pas propres aux réseaux de neurones, le principe de fonctionnement du circuit tel que décrit précédemment restant le même. En particulier, avantageusement, l'invention permet la réalisation efficace de méthodes de traitement du signal conventionnelles, utiles notamment avant le traitement neuronal et/ou après le traitement neuronal (pré- et posttraitement).

## Revendications

**1.** Circuit apte à implémenter un réseau de neurones, comportant au moins :

- une série de modules élémentaires (1), dits neuro-blocs, aptes à implémenter un ensemble de neurones, lesdits neuro-blocs étant regroupés par branches, une branche étant formée d'un groupe de neuro-blocs (1) et d'un bus de diffusion (2), les neuro-blocs étant connectés audit bus de diffusion (2) ;

- une unité de routage (3) reliée aux bus de diffusion desdites branches, effectuant au moins le routage et la diffusion de données vers et depuis lesdites branches ;

**caractérisé en ce que** ledit circuit comporte en outre :

- un module (6) de transformation relié à l'unité de routage (3) par un bus interne (21) et apte à être relié en entrée dudit circuit (10) à un bus de données externe (7), ledit module (6) effectuant la transformation du format des données d'entrées véhiculées par ledit bus externe (7), un message de N mots successifs d'entrée de x bits codés en parallèles (7) étant transformé en un message de N mots de x bits codés en série, les N mots étant parallélisés sur le bus interne (21) en sortie dudit module (6), un fil (33) du bus étant dédié à un mot, les mots étant diffusés sur les bus de diffusion des branches et les autres composants internes dudit circuit, vers les neuro-blocs connectés auxdits bus de diffusion, via l'unité de routage (3) avec le même codage série, de sorte que tous les traitements internes audit circuit sont effectués selon un protocole de communication série comportant pour la transmission d'un message donné, une information précisant l'unité cible.

**2.** Circuit selon la revendication 1, **caractérisé en ce que** l'unité de routage (3) comporte un bus d'entrée/sortie de façon à router et à diffuser des données vers ou depuis une unité externe selon ledit protocole de communication série.

**3.** Circuit selon la revendication 1, **caractérisé en ce que** ladite information précise l'identifiant d'un ou plusieurs neuro-blocs (1).

**4.** Circuit selon l'une quelconque des revendications 1 ou 3, **caractérisé en ce que** ladite information précise la ou les branches, ou l'unité externe destinataires dudit message.

**5.** Circuit selon l'une quelconque des revendications précédentes, **caractérisé en ce que** l'unité de routage (3) effectue en outre des opérations de calcul globales sur les données.

**6.** Circuit selon l'une quelconque des revendications précédentes, **caractérisé en ce qu'**il comporte un module (8) d'accès direct mémoire de type DMA couplé via un bus (15) à chaque neuro-bloc (1), ledit module (8) étant apte à être interfacé avec une mémoire externe.

**7.** Circuit selon la revendication 6, **caractérisé en ce**

**que** comportant un module de contrôle central (11), ledit module (8) est relié à ce module de contrôle central via un bus (14).

8. Circuit selon l'une quelconque des revendications précédentes, **caractérisé en ce que** les neuro-blocs (1) comportant chacun un ensemble d'unités arithmétiques et logiques (ALU), toutes les unités arithmétiques et logiques sont branchées sur un même bus d'interconnexion (4), ledit bus (4) étant apte à être prolongé à l'extérieur dudit circuit (10) en amont et en aval des neuro-blocs (1), chaque unité arithmétique et logique (ALU) permettant de réaliser les fonctions d'un neurone

9. Circuit selon l'une quelconque des revendications précédentes, **caractérisé en ce que** les bus de diffusion (2) comportent 32 fils de données disponibles.

10. Circuit selon l'une quelconque des revendications précédentes, **caractérisé en ce qu'**il comporte quatre branches de 8 neuro-blocs (1) ou huit branches de 4 neuro-blocs (1).

11. Circuit selon l'une quelconque des revendications précédentes, **caractérisé en ce qu'**il effectue des fonctions de traitement du signal.

12. Circuit selon la revendication 11, **caractérisé en ce qu'**il réalise des fonctions de pré-traitement et/ou de post-traitement du signal par rapport à des fonctions de traitement neuronal.

13. Système neuronal, **caractérisé en ce qu'**il comporte plusieurs circuits (10) selon l'une quelconque des revendications précédentes.

**Patentansprüche**

1. Schaltung, welche zur Implementierung eines neuronalen Netzes in der Lage ist, mindestens Folgendes umfassend:

   - eine Reihe von Elementarmodulen (1), genannt Neuroblöcke, welche in der Lage sind, eine Gruppe von Neuronen zu implementieren, wobei die Neuroblöcke zu Zweigen zusammengefasst sind, wobei ein Zweig aus einer Gruppe von Neuroblöcken (1) und einem Broadcast-Bus (2) gebildet ist, wobei die Neuroblöcke mit dem Broadcast-Bus (2) verbunden sind;
   - eine Routingeinheit (3), welche mit dem Broadcast-Bus der Zweige verbunden ist, welche mindestens das Routing und das Broadcast von Daten an und von den Zweigen aus bewerkstelligt;

   **dadurch gekennzeichnet, dass** die Schaltung ferner Folgendes umfasst:

   - ein Umwandlungsmodul (6), welches mit der Routingeinheit (3) durch einen internen Bus (21) verbunden und in der Lage ist, am Eingang der Schaltung (10) mit einem externen Datenbus (7) verbunden zu werden, wobei das Modul (6) die Formatumwandlung der Eingangsdaten bewerkstelligt, welche durch den externen Bus (7) befördert werden, wobei eine Eingangsnachricht aus N aufeinanderfolgenden, parallel codierten Worten mit x Bits (7) in eine Nachricht aus N Wörtern mit x Bits umgewandelt wird, welche in Reihe codiert sind, wobei die N Wörter auf dem internen Bus (21) am Ausgang des Moduls (6) parallelisiert werden, wobei eine Leitung (33) des Busses einem Wort gewidmet ist, wobei die Wörter auf den Broadcast-Bussen der Zweige und die anderen internen Komponenten der Schaltung ausgestrahlt werden, an die mit den Broadcast-Bussen verbundenen Neuroblöcke, über die Routingeinheit (3), mit der gleichen Reihencodierung, so dass alle internen Verarbeitungen der Schaltung gemäß einem Reihen-Kommunikationsprotokoll bewerkstelligt werden, welches für die Übertragung einer gegebenen Nachricht eine Information enthält, welche die Zieleinheit präzisiert.

2. Schaltung nach Anspruch 1, **dadurch gekennzeichnet, dass** die Routingeinheit (3) einen Eingangs-/Ausgangsbus dergestalt umfasst, dass sie Daten in Richtung einer externen Einheit und von dieser aus gemäß dem Reihen-Kommunikationsprotokoll routen und ausstrahlen kann.

3. Schaltung nach Anspruch 1, **dadurch gekennzeichnet, dass** die Information die Kennung eines oder mehrerer Neuroblöcke (1) präzisiert.

4. Schaltung nach einem der Ansprüche 1 oder 3, **dadurch gekennzeichnet, dass** die Information den oder die Empfänger-Zweig(e) oder die externe Empfängereinheit der Nachricht präzisiert.

5. Schaltung nach einem der vorhergehenden Ansprüche, **dadurch gekennzeichnet, dass** die Routingeinheit (3) ferner globale Berechnungsoperationen an den Daten vornimmt.

6. Schaltung nach einem der vorhergehenden Ansprüche, **dadurch gekennzeichnet, dass** sie ein Modul (8) zum direkten Speicherzugriff vom Typ DMA umfasst, welches über einen Bus (15) mit jedem Neuroblock (1) gekoppelt ist, wobei das Modul (8) in der Lage ist, mit einem externen Speicher verknüpft zu werden.

**7.** Schaltung nach Anspruch 6, **dadurch gekennzeichnet, dass**, da sie ein zentrales Steuerungsmodul (11) umfasst, das Modul (8) mit diesem zentralen Steuerungsmodul über einen Bus (14) gekoppelt ist.

**8.** Schaltung nach einem der vorhergehenden Ansprüche, **dadurch gekennzeichnet, dass**, da die Neuroblöcke (1) jeweils eine Gruppe von arithmetischen und logischen Einheiten (ALU) umfassen, sämtliche arithmetischen und logischen Einheiten an denselben Verbindungsbus (4) angeschlossen sind, wobei der Bus (4) in der Lage ist, außerhalb der Schaltung (10) im vorgelagerten und im nachgelagerten Bereich der Neuroblöcke (1) verlängert zu werden, wobei jede arithmetische und logische Einheit (ALU) es ermöglicht, die Funktionen eines Neurons auszuführen.

**9.** Schaltung nach einem der vorhergehenden Ansprüche, **dadurch gekennzeichnet, dass** die Broadcast-Busse (2) 32 verfügbare Datenleitungen umfassen.

**10.** Schaltung nach einem der vorhergehenden Ansprüche, **dadurch gekennzeichnet, dass** sie vier Zweige mit 8 Neuroblöcken (1) oder acht Zweige mit 4 Neuroblöcken (1) umfasst.

**11.** Schaltung nach einem der vorhergehenden Ansprüche, **dadurch gekennzeichnet, dass** sie Signalverarbeitungsfunktionen ausführt.

**12.** Schaltung nach Anspruch 11, **dadurch gekennzeichnet, dass** sie Vorverarbeitungs- und/oder Nachverarbeitungsfunktionen des Signals in Bezug auf neuronale Verarbeitungsfunktionen ausführt.

**13.** Neuronales System, **dadurch gekennzeichnet, dass** es mehrere Schaltungen (10) nach einem der vorhergehenden Ansprüche umfasst.

**Claims**

**1.** A circuit capable of implementing a neural network, comprising at least:

- a series of elementary modules (1), called neuro-blocks, capable of implementing an assembly of neurons, said neuro-blocks being grouped together in branches, a branch being composed of a group of neuro-blocks (1) and of a broadcasting bus (2), the neuro-blocks being connected to said broadcasting bus (2);
- a routing unit (3) connected to the broadcasting bus of said branches, carrying out at least the routing and the broadcasting of data to and from said branches;

**characterised in that** said circuit further comprises

- a transformation module (6) connected to the routing unit (3) via an internal bus (21) and capable of being connected, at the input of said circuit (10), to an external databus (7), said module (6) carrying out the transformation of the format of the input data carried by said external bus (7), a message of N consecutive input words with x bits coded in parallel (7) being transformed into a message of N words with x bits coded in series, the N words being parallelised over the internal bus (21) at the output of said module (6), one wire (33) of the bus being dedicated to one word, the words being broadcast over the broadcasting buses of the branches and the other internal components of said circuit to the neuro-blocks connected with said broadcasting buses via the routing unit (3) with the same serial coding, in such a manner that all the processing operations internal to said circuit are carried out according to a serial communications protocol comprising for the transmission of a given message, information indicating the target unit.

**2.** The circuit according to claim 1, **characterised in that** the routing unit (3) comprises an input/output bus so as to route and to broadcast data to or from an external unit according to said serial communications protocol.

**3.** The circuit according to claim 1, **characterised in that** said information indicates the identifier of one or more neuro-blocks (1).

**4.** The circuit according to any one of claims 1 or 3, **characterised in that** said information indicates the destination branch or branches or external unit for said message.

**5.** The circuit according to any one of the preceding claims, **characterised in that** the routing unit (3) further performs global computing operations on the data.

**6.** The circuit according to any one of the preceding claims, **characterised in that** it comprises a module (8) for direct memory access of the DMA type coupled via a bus (15) to each neuro-block (1), said module (8) being capable of being interfaced with an external memory.

**7.** The circuit according to claim 6, **characterised in that**, comprising a central control module (11), said module (8) is connected to this central control module via a bus (14).

8. The circuit according to any one of the preceding claims, **characterised in that**, the neuro-blocks (1) each comprising a set of arithmetic and logic units (ALU), all the arithmetic and logic units are connected to the same interconnection bus (4), said bus (4) being capable of being extended outside of said circuit (10) upstream and downstream of the neuro-blocks (1), each arithmetic and logic unit (ALU) allowing to fulfil the functions of a neuron.

9. The circuit according to any one of the preceding claims, **characterised in that** the broadcasting buses (2) comprise 32 available data wires.

10. The circuit according to any one of the preceding claims, **characterised in that** it comprises four branches of 8 neuro-blocks (1) or eight branches of 4 neuro-blocks (1).

11. The circuit according to any one of the preceding claims, **characterised in that** it performs signal processing functions.

12. The circuit according to claim 11, **characterised in that** it performs signal preprocessing and/or post-processing functions with respect to neural processing functions.

13. A neural system, **characterized in that** it comprises several circuits (10) according to any one of the preceding claims.

FIG.1

EP 3 053 108 B1

$M_{P16}^1\ M_{P16}^2\ ....\ M_{P16}^{32}$

32 mots
de 16bits en parallèle

6

16

7

34

21

$M_{S16}^1$

$M_{S16}^2$

32 mots de 16bits
en parallèle

$M_{S16}^{32}$

Contrôle

22

## FIG.2

31

32

2 fils de
contrôle

Data[31]

32 fils de
données

33

Data[0]

## FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **YOUNG, D ; LEE, A. W H ; CHENG, L.M.** Hardware realisation of artificial neural network with application to information coding. *Neural Networks,* 1994
- *IEEE World Congress on Computational Intelligence.,* 1994, 3982-3985
- *IEEE International Conference,* vol. 6
- Artificial neural networks in hardware: A survey of two decades of progress. **MISRA.** NEUROCOMPUTING. ELSEVIER SCIENCE PUBLISHERS, 31 Décembre 2010, vol. 74, 239-255
- GENES IV: A bit-serial processing element for a built-model neural-network accelerator,. **LENNE, P. ; VIREDAZ, M.A.** Application-Specific Array Processors,. Proceedings., International Conference, 25 Octobre 1993, 345, , 356
- SYNAPSE-1: a high-speed general purpose parallel neurocomputer system. **RAMACHER, U. ; RAAB, W. ; HACHMANN, J.A.U ; BEICHTER, J. ; BRUIS, N. ; WESSELING, M. ; SICHENEDER, E. ; GLASS, J. ; WURZ, A. ; MANNER, R.** Parallel Processing Symposium,. Proceedings., 9th International, 25 Avril 1995, 774, , 781
- **EPPLER, W. ; FISCHER, T. ; GEMMEKE, H. ; MENCHIKOV, A.** High speed neural network chip for trigger purposes in high energy physics. *Design, Automation and Test in Europe,* 1998, 108-115
- **N. MAUDUIT et al.** L-Neuro 1.0: A Piece of Hardware LEGO for Building Neural Network Systems,. *IEEE Trans. Neural Networks,* Mai 1992, vol. 3 (3), 414-422
- **DE M. DURANTON.** L-Neuro 2.3: A VLSI for Image Processing by Neural Networks. *5th International Conference on Microelectronics for Neural Networks and Fuzzy Systems (MicroNeuro '96),* 1996, 157
- **HAMMERSTROM, D.** A VLSI architecture for high-performance, low-cost, on-chip learning. *Neural Networks,* 1990, 537-544
- *1990 IJCNN International Joint Conference*
- **YASUNAGA, M.; ; MASUDA, N.** A self-learning neural network composed of 1152 digital neurons in wafer-scale LSIs. *Neural Networks, 1991. 1991 IEEE International Joint Conference,* 18 Novembre 1991, vol. 3, 1844-1849
- **JOHANSSON, H.O. et al.** A 200-MHz CMOS bit-serial neural network. *ASIC Conference and Exhibit,* 19 Septembre 1994, 312, , 315
- **WOJCIECHOWSKI, E.** SNAP: a parallel processor for implementing real-time neural networks. *Aerospace and Electronics Conference,* 1991
- **KONDO, Y. et al.** A 1.2 GFLOPS neural network chip for high-speed neural network servers. *Solid-State Circuits, IEEE Journal,* Juin 1996, vol. 31 (6), 860-864
- **FARABET, C.** NeuFlow: A runtime reconfigurable dataflow processor for vision. *Computer Vision and Pattern Recognition Workshops (CVPRW), 2011 IEEE Computer Society Conference,* 20 Juin 2011, 109-116
- Artificial neural networks in hardware : A survey of two decades of progress. **MISRA et al.** NEUROCOMPUTING. ELSEVIER SCIENCE PUBLISHERS, 31 Décembre 2010, vol. 74, 239-255